# EUROPEAN PATENT APPLICATION

(11) **EP 4 721 958 A1**
(43) Date of publication of application: **08.04.2026**
(21) Application number: 23920107.2
(22) Date of filing: 20.09.2023
(51) Int. Cl.: B29C 65/16, B29C 65/00, B01D 46/00

(54) **LASER SCANNING-TYPE PLASTIC WELDING DEVICE USING BUNDLE FIBER**

(30) Priority: 30.01.2023 KR 20230011431
(71) Applicant: Evlaser Co., Ltd., Gunpo-si, Gyeonggi-do 15850 (KR)
(72) Inventor: HAN, Sangbae, Gunpo-si Gyeonggi-do 15850 (KR)
(74) Representative: Valet Patent Services Limited
(86) International application number: PCT/KR2023/014256
(87) International publication number: WO 2024/162557

(57) **Abstract**

The present invention relates to a laser scanning-type plastic welding device using a bundle fiber, the device comprising: a scanner 10 comprising a laser oscillator, a light source, and multiple rotatable mirrors, thereby emitting a laser beam (B); a beam box 20 installed at a lower side of the scanner 10 so as to form a space through which a laser beam (B) is emitted; a first holding plate 30 supported on a lower end of the beam box 20 such that a laser beam (B) is emitted thereto; a first bundle fiber 40 supported on the first holding plate 30 and made of multiple first fibers 41, 41' such that a laser beam (B) emitted thereto branches off into multiple first laser beams B1; a second holding plate 50 supported on a pair of bridges 51 extending from the beam box 20; a second bundle fiber 60 supported on the second holding plate 50 and made of multiple second fibers 61, 61' connected to the multiple first fibers 41, 41', respectively, such that a first laser beam (B2) emitted thereto branches off into multiple second laser beams (B2); and a beam guide jig 80 for selectively pressurizing a first cover P1 toward a housing P2, the beam guide jig 80 having a channel 81 formed oppositely along the circumference of a first welding edge R1 such that exits of the second fibers 61, 61' are arranged therein.

## Description

### [TECHNICAL FIELD]

The present invention relates to a plastic welding device, and more particularly, to a laser scanning-type plastic welding device using a bundle fiber, which can directly emit a laser beam emitted from a laser beam scanner to the first and second welding edges of a plastic temporary assembly using a bundle fiber, thereby welding a three-dimensional temporary assembly.

### [BACKGROUND ART]

Generally, as a method of joining two members made of plastic, a method of applying adhesive to either one of the upper and lower members to be joined, or a method of joining the members using ultrasonic welding, vibration welding, or hot plate welding is used.

However, in the case of such a method, environmental contamination occurs due to the use of adhesives, the appearance quality of joint portions is deteriorated, and the joint strength is not constant, so that when mechanical external force is applied, damage occurs inside the product, and most importantly, the problem of watertightness is caused.

In order to address these problems, a laser welding method that locally conducts heat and at the same time, realizes it in a non-contact manner has been proposed.

The laser beam welding method means that a plastic cover having a property that allows a laser beam serving as an upper member to pass through is tightly adhered to an opaque plastic housing serving as a lower member, thereby forming a temporary assembly in which the second welding edge on the housing edge side and the first welding edge on the cover edge side are overlapped together, and then a light source supported by a robot emits the laser beam along the first and second welding edges to thereby weld the cover to the housing. That is, the laser that passes through the first welding edge of the cover is absorbed by the second welding edge of the opaque housing, thereby causing the melted second welding edge to be welded to the first welding edge, so that the cover and the housing are joined.

However, since the plastic welding of the temporary assembly must be performed while moving the robot supporting a light source, it takes a lot of time in the process of precisely setting the robot's movement path, or moving it for actual welding, and thus the welding-related productivity is not high.

In addition, since the robot itself is quite expensive and requires a lot of space, there are problems that the price of the plastic welding device has to be set very expensively, a lot of effort is required to set up the robot's movement path precisely, and a large installation space is required.

### [DETAILED DESCRIPTION OF THE INVENTION]

### [Technical Problem]

The present invention has been designed to solve the above problems, and an object of the present invention is to provide a laser scanning-type plastic welding device using a bundle fiber, which can weld a three-dimensional plastic temporary assembly by using a bundle fiber without employing a robot, thereby shortening the welding time and increasing welding-related productivity.

### [Technical Solution]

In order to achieve the above object, according to an aspect of the present invention, there is provided a laser scanning-type plastic welding device using a bundle fiber, which is for welding a first welding edge R1 of a cover P1 made of transparent plastic through which a laser beam is transmitted to a second welding edge R2 of a housing P2 made of opaque plastic with a three-dimensional shape by using a laser beam, the device comprising: a scanner 10 comprising a laser oscillator, a light source, and multiple rotatable mirrors, thereby emitting a laser beam (B); a beam box 20 installed at a lower side of the scanner 10 so as to form a space through which a laser beam (B) is emitted; a first holding plate 30 supported on a lower end of the beam box 20 such that a laser beam (B) is emitted thereto; a first bundle fiber 40 supported on the first holding plate 30 and made of multiple first fibers 41, 41' such that a laser beam (B) emitted thereto branches off into multiple first laser beams B1; a second holding plate 50 supported on a pair of bridges 51 extending from the beam box 20; a second bundle fiber 60 supported on the second holding plate 50 and made of multiple second fibers 61, 61' connected to the multiple first fibers 41, 41', respectively, such that a first laser beam (B2) emitted thereto branches off into multiple second laser beams (B2); and a beam guide jig 80 for selectively pressurizing a first cover P1 toward a housing P2, the beam guide jig 80 having a channel 81 formed oppositely along the circumference of a first welding edge R1 such that exits of the second fibers 61, 61' are arranged therein.

In a specific embodiment of the present invention, the laser scanning-type plastic welding device further comprises a monitoring unit 70 for monitoring the operation status using a detecting fiber 62 branched off from the second bundle fiber 60.

In a specific embodiment of the present invention, the monitoring unit 70 comprises: a power detector 71 that detects the output of the second laser beam (B2) emitted from a first detecting fiber 62a among the detecting fibers and checks in real time whether the second laser beam (B2) is currently being emitted; a heat detector 72 that detects the second laser beam (B2) emitted from a second detecting fiber 62b among the detecting fibers and generates a signal for inspecting the temperature of the product welding part to which the output of the emitted second laser beam (B2) is applied; and a beam profiler 73 that detects the second laser beam (B2) irradiated from the second detecting fiber 62c among the detecting fibers and checks the characteristics of the emitted second laser beam (B2).

In a specific embodiment of the present invention, the laser scanning-type plastic welding device further comprises: a contamination source inflow prevention unit 90 for preventing external contamination sources from flowing into the inside of the beam box 20, wherein the contamination source inflow prevention unit 90 includes an air entrance 91 formed on the upper side of the beam box 20 to supply air in which foreign substances are filtered and removed, and a plurality of air exhaust holes 92 formed on the lower side of the beam box 20 to exhaust air that has flowed into the air entrance 91.

In a specific embodiment of the present invention, the laser scanning-type plastic welding device further comprises a first cooling part 100 for cooling the first holding plate 30 while the scanner 10 is in operation.

In a specific embodiment of the present invention, the laser scanning-type plastic welding device further comprises a fiber temperature sensor unit 110 installed on the first holding plate 30 and comprising a plurality of temperature sensors 111, 111', each of which is independently connected to the first fibers 41, 41' constituting the first bundle fiber 40, and which measures the temperature of each of the first fibers 41, 41' and generate a corresponding signal.

In a specific embodiment of the present invention, the laser scanning-type plastic welding device further comprises a second cooling part 120 for cooling the second holding plate 50 while the scanner 10 is in operation.

### [Advantageous Effects]

A laser scanning-type plastic welding device according to the present invention comprises a first bundle fiber 40 supported on the first holding plate 30 and made of multiple first fibers 41, 41' such that a laser beam (B) emitted thereto branches off into multiple first laser beams B1; a second bundle fiber 60 supported on the second holding plate 50 and made of multiple second fibers 61, 61' connected to the multiple first fibers 41, 41', respectively, such that a first laser beam (B2) emitted thereto branches off into multiple second laser beams (B2); and a beam guide jig 80 for selectively pressurizing a first cover P1 toward a housing P2, the beam guide jig 80 having a channel 81 formed oppositely along the circumference of a first welding edge R1 such that exits of the second fibers 61, 61' are arranged therein. Therefore, the second laser beam (B2) can be emitted simultaneously through the entire channel 81 to weld the first and second welding edges R1, R2 at once, thereby shortening the time required for welding and improving efficiency.

In addition, the temperature (output) of the second laser beam (B2) emitted to the channel 81 in the process of welding the temporary assembly P can be monitored in real time through the monitoring unit 70, so that the presence of welding defects can be checked in real time, which enables high-quality welding and easy maintenance.

### [BRIEF DESCRIPTION OF THE DRAWINGS]

FIG. 1 is a perspective view of a laser scanning-type plastic welding device using a bundle fiber according to the present invention;
FIG. 2 is a perspective view showing an excerpt of a plastic housing and cover welded by the welding device of FIG. 1;
FIG. 3 is a perspective view of the main configuration of the laser scanning-type plastic welding device of FIG. 2;
FIG. 4 is a perspective view for explaining a channel of the bottom edge of a beam guide jig in which the second bundle fibers of FIG. 3 are installed in a row,
FIG. 5 is a diagram for explaining a fiber temperature sensor unit for independently sensing the temperature of each of the first fibers constituting the first bundle fiber of FIG. 1;
FIG. 6 is a diagram for explaining a first cooling part installed on a first holding plate of FIG. 3;
FIG. 7 is a diagram for explaining a second cooling part installed on a second holding plate of FIG. 3; and
FIG. 8 is a perspective view for explaining that a cover is welded to a housing of FIG. 2 by a laser beam.

### [DETAILED DESCRIPTION OF THE EMBODIMENTS]

Hereinafter, a laser scanning-type plastic welding device using a bundle fiber according to the present invention will be described in detail with reference to the accompanying drawings.

When a component is "on top of" or "on" another component, it should be construed that a component may be directly on and in contact with another component, or may be on another component in a noncontact manner. While such terms as "first," "second," etc., may be used to describe various components, such components must not be limited to the above terms. The above terms are used only to distinguish one component from another. The articles "a," "an," and "the" are intended to include the plural forms as well, unless the context clearly indicates otherwise. When a portion is referred to as "including" or "comprising" a certain component, it means that the portion can further include other components, without excluding the other components, unless otherwise stated. In addition, terms such as "... part", "module", and the like described therein mean a unit that processes at least one function or operation.

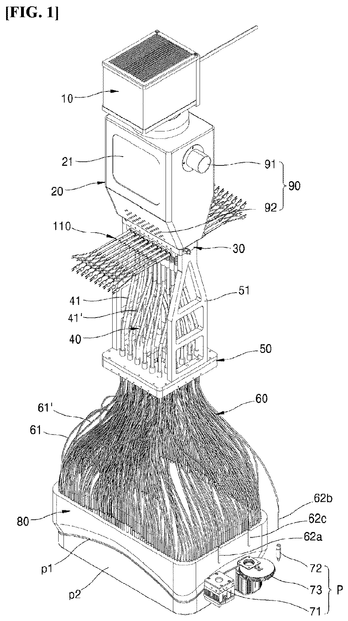

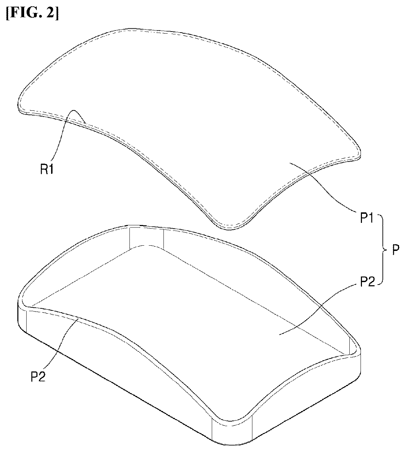

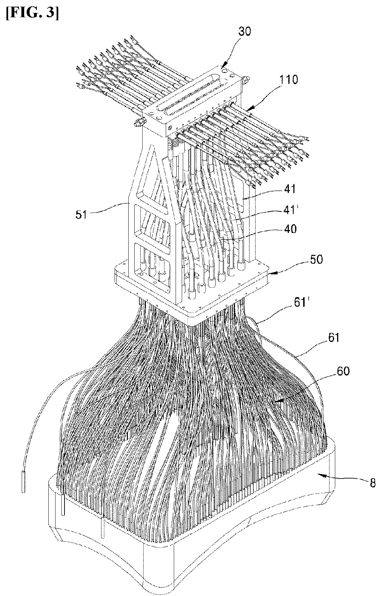

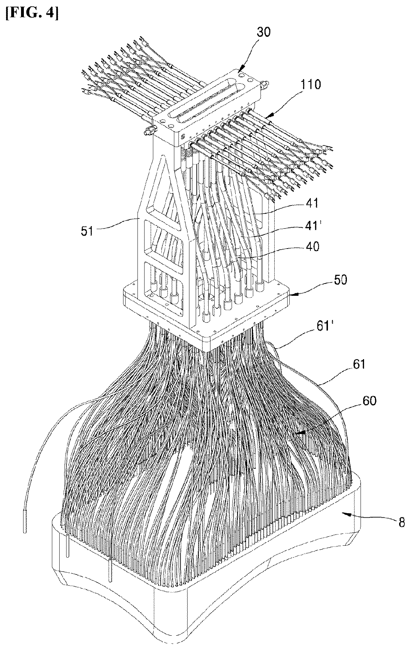

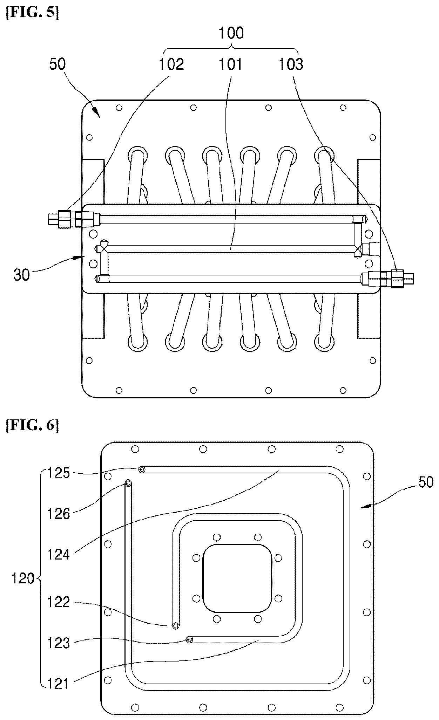

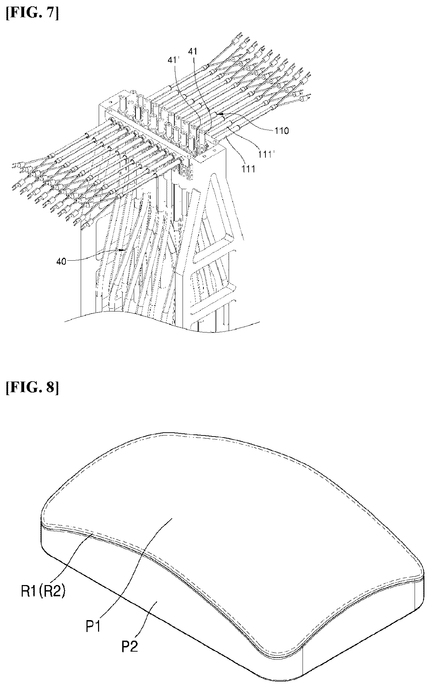

FIG. 1 is a perspective view of a laser scanning-type plastic welding device using a bundle fiber according to the present invention; FIG. 2 is a perspective view showing an excerpt of a plastic housing and cover welded by the welding device of FIG. 1; FIG. 3 is a perspective view of the main configuration of the laser scanning-type plastic welding device of FIG. 2; FIG. 4 is a perspective view for explaining a channel of the bottom edge of a beam guide jig in which the second bundle fibers of FIG. 3 are installed in a row, and FIG. 5 is a diagram for explaining a fiber temperature sensor unit for independently sensing the temperature of each of the first fibers constituting the first bundle fiber of FIG. 1. Further, FIG. 8 is a perspective view for explaining that a cover is welded to a housing of FIG. 2 by a laser beam.

As shown in the figures, a laser scanning-type plastic welding device using a bundle fiber according to the present invention is for welding a first welding edge R1 of a cover P1 made of transparent plastic through which a laser beam is transmitted to a second welding edge R2 of a housing P2 made of opaque plastic with a three-dimensional shape by using a laser beam.

Such a laser scanning-type plastic welding device includes a scanner 10 comprising a laser oscillator, a light source, and multiple rotatable mirrors, thereby emitting a laser beam (B); a beam box 20 installed at a lower side of the scanner 10 so as to form a space through which a laser beam (B) is emitted; a first holding plate 30 supported on a lower end of the beam box 20 such that a laser beam (B) is emitted thereto; a first bundle fiber 40 supported on the first holding plate 30 and made of multiple first fibers 41, 41' such that a laser beam (B) emitted thereto branches off into multiple first laser beams B1; a second holding plate 50 supported on a pair of bridges 51 extending from the beam box 20; a second bundle fiber 60 supported on the second holding plate 50 and made of multiple second fibers 61, 61' connected to the multiple first fibers 41, 41', respectively, such that a first laser beam (B2) emitted thereto branches off into multiple second laser beams (B2); a beam guide jig 80 for selectively pressurizing a first cover P1 toward a housing P2, the beam guide jig 80 having a channel 81 formed oppositely along the circumference of a first welding edge R1 such that exits of the second fibers 61, 61' are arranged therein; a contamination source inflow prevention unit 90 for preventing external contamination sources from flowing into the inside of the beam box 20; a first cooling part 100 for cooling the first holding plate 30) while the scanner 10 is in operation; a fiber temperature sensor unit 110 installed on the first holding plate 30 and comprising a plurality of temperature sensors 111, 111', each of which is independently connected to the first fibers 41, 41' constituting the first bundle fiber 40, and which measures the temperature of each of the first fibers 41, 41' and generate a corresponding signal; and a second cooling part 120 for cooling the second holding plate 50 while the scanner 10 is in operation.

As shown in FIG. 2, the temporary assembly P consisting of a cover P1 overlapped with a housing P2 is completely joined by welding the first and second welding edges R1, R2 by a laser beam, and when the temporary assembly is completed after welding, it is used in various fields, for example, as a body of a front lamp or rear lamp of an automobile.

The scanner 10 is composed of a laser oscillator, a light source, and multiple rotatable mirrors, and is of a configuration commonly used in the art, and thus, further detailed description thereof will be omitted.

As shown in FIG. 1, the beam box 20 is installed at a lower side of the scanner 10 and has a three-dimensional shape that forms a space where the laser beam (B) is emitted, and the entrance side faces the scanner 10 and the exit side faces the first holding plate 30.

A laser safety window 21 for checking the inside is installed in front of the beam box 20. The laser safety window 21 allows an operator to check the inside of the beam box 20 and thus check whether the welding device is operating normally, and protects the operator from the laser beam during the check.

As shown in FIG. 3, the first holding plate 30 has a rectangular plate shape as a whole, and is supported on the lower end of the exit side of the beam box 20.

Two plate slots 31, 32 for supporting the entrances of the first fibers 41, 41' are formed on the upper side of the first holding plate 30. At this time, the plate long holes 31, 32 are preferably provided with beam guiders (not shown) for focusing the laser beam (B) emitted from the scanner 10 onto the first and second fibers 41, 41'.

The first bundle fiber 40 is composed of multiple first fibers 41, 41' so that the incident laser beam (B) can branch off into multiple first laser beams B1, and the entrance side of the first fibers 41, 41' is located inside the plate holes 31, 32.

As shown in FIG. 3, the second holding plate 50 is formed in a square plate shape as a whole and is supported by a pair of bridges 51 extended from the beam box 20.

The second bundle fiber 60 includes multiple second fibers 61, 61' for branching off the incident first laser beam (B2) into multiple second laser beams (B2). For this purpose, the multiple second fibers 61, 61' are branched and connected to each of the first fibers 41, 41' in a plurality of units, as shown in FIG. 4.

The monitoring unit 70 is for monitoring the operating status using the detecting fiber 62 branched off from the second bundle fiber 60. As shown in FIG. 1, the monitoring unit 70 comprises: a power detector 71 that detects the output of the second laser beam (B2) emitted from a first detecting fiber 62a among the detecting fibers and checks in real time whether the second laser beam (B2) is currently being emitted; a heat detector 72 that detects the second laser beam (B2) emitted from a second detecting fiber 62b among the detecting fibers and generates a signal for inspecting the temperature of the product welding part to which the output of the emitted second laser beam (B2) is applied; and a beam profiler 73 that detects the second laser beam (B2) irradiated from the second detecting fiber 62c among the detecting fibers and checks the characteristics of the emitted second laser beam (B2).

Through such a power detector 71, it is possible to check in real time whether the laser beam is being emitted normally. Through the heat detector 72, it is possible to inspect the temperature of the product welding part to which the output of the emitted second laser beam (B2) is applied. Through the beam profiler 73, it is possible to check the same characteristics as the wavelength of the emitted second laser beam (B2). The signals generated by such power detector 71, heat detector 72, and beam profiler 73 are used as signals to check in real time whether the cover P1 is being welded to the housing P2 normally, and conversely, are used as signals to generate an alarm when an abnormal event situation occurs.

As shown in FIG. 4, the beam guide jig 80 has a shape in which an uneven surface corresponding to the first cover P1 is formed so as to be able to press the first welding edge R1 of the first cover P1. The bottom edge of the beam guide jig 80 is formed with a channel 81 in which exits of the multiple second bundle fibers 60 are arranged along the circumference of the first welding frame R1.

When the beam guide jig 80 pressurizes the cover P1 temporarily assembled to the housing R2, the channel 81 faces the first and second welding edges R1, R2, and in this state, the second laser beam (B2) is simultaneously emitted to the second fiber 61, 61' constituting the second bundle fiber 60, so that welding is performed at a time on both the first and second welding edges R1, R2 corresponding to the channel 81.

The second welding edge R2 of the housing P2 and the first welding edge R1 of the cover P1 are welded o each other by such a beam guide jig 80, so that the cover P1 forms a single body with the housing P2 as shown in FIG. 8.

The contamination source inflow prevention unit 90 includes an air entrance 91 formed on the upper side of the beam box 20 to supply air in which foreign substances are filtered and removed, and a plurality of air exhaust holes 92 formed on the lower side of the beam box 20 to exhaust air that has flowed into the air entrance 91.

An appropriate space for the laser beam to spread is required between the scanner 10 and the first bundle fiber 40, and this space is formed inside the beam box 20.

On the other hand, if foreign substances such as dust or fumes generated in the process of welding the temporary assembly flow into the inside of the beam box 20, these foreign substances may adhere to the entrance surface of the first fibers 41, 41' that constitute the first bundle fiber 40. When the laser beam is emitted in this state, the foreign substances adhered to the entrance surface burn, and color the entrance surface opaquely. In this case, the opaque entrance surface absorbs the energy of the laser beam and the temperature rises to several hundred degrees or more. Thereby, the first bundle fiber 40 itself may be damaged, or the covering wrapping around the first bundle fiber may be damaged.

To prevent this, the contamination source inflow prevention unit 90 applies air from which foreign matter has been filtered out through the air entrance 91 to constantly maintain the inside of the beam box 20 in a positive pressure state at all times, and prevent external foreign substances from flowing into the beam box 20. This makes it possible to prevent various optical systems and the first bundle fiber 40 from external contamination sources.

The fiber temperature sensor unit 110 independently measures the temperature of each of the first fibers 41, 41' constituting the first bundle fiber 40, senses whether a specific first fiber is abnormally heated, and generates a signal so that an appropriate response can be taken. It includes a plurality of temperature sensors, and in the present embodiment, it includes 20 temperature sensors 111, 111'.

The laser beam (B) emitted from the scanner 10 is emitted to a plurality of first fibers 41, 41' installed on the first holding plate 30. At this time, some of the laser beams B that are not incident on the entrance of the first fibers 41, 41' are absorbed around the first fibers 41, 41', and the first fibers are heated by conduction heat, which may result in damage.

In the present invention, by adopting a fiber temperature sensor unit 110 composed of a plurality of temperature sensors 111, 111' that independently measure the temperature of each of a plurality of first fibers 41, 41', it is possible to sense that a specific first fiber 41, 41' is abnormally heated by a laser beam that is not completely incident on the first fiber 41, 41', thereby enabling appropriate measures to be taken to prevent damage to the first fibers 41, 41'.

FIG. 6 is a diagram for explaining a first cooling part installed on a first holding plate of FIG. 3.

The first cooling part 100 includes a first coolant path 101 formed in a zigzag pattern inside the first holding plate 30, a first entrance 102 installed on one side of the first holding plate 30 to supply coolant to the first coolant flow path 101, and a first exit 103 installed on the other side of the first holding plate 30 to discharge coolant that has passed through the coolant flow path 101.

This first cooling section 100 cools the heat that may be generated in the first holding plate 30 in the process of distributing the laser beam (B) emitted from the scanner 10 into a plurality of first laser beams B1, thereby preventing the first bundle fiber 40 supported on the first holding plate 30 from being damaged by high heat.

FIG. 7 is a diagram for explaining a second cooling part installed on a second holding plate of FIG. 3.

The second cooling part 120 comprises a second inner coolant flow path 121 formed on the inner side of the second holding plate 50, a second inner entrance 122 installed on one side of the second holding plate 50 and supplying coolant to the second inner coolant flow path 121, a second inner exit 123 that is installed on the other side of the second holding plate 50 and discharges the coolant passing through the second inner coolant flow path 121, a second outer coolant flow path 124 formed on the outer side of the second holding plate 50, a second outer entrance 125 installed on one side of the second holding plate 50 and supplying coolant to the second outer coolant flow path 124, and a second outer exit 126 that is installed on the other side of the second holding plate 50 and discharges the coolant passing through the second outer coolant flow path 124.

Such a second cooling part 120 can cool the heat that may be generated in the second holding plate 50 during the process of distributing the first laser beam (B)1 emitted from the first bundle fiber 40 into a plurality of second laser beams (B2), thereby preventing the second bundle fiber 60 supported on the second holding plate 50 from being damaged by high heat.

### [Industrial Applicability]

As set forth above, a laser scanning-type plastic welding device according to the present invention comprises a first bundle fiber 40 supported on the first holding plate 30 and made of multiple first fibers 41, 41' such that a laser beam (B) emitted thereto branches off into multiple first laser beams B1; a second bundle fiber 60 supported on the second holding plate 50 and made of multiple second fibers 61, 61' connected to the multiple first fibers 41, 41', respectively, such that a first laser beam (B2) emitted thereto branches off into multiple second laser beams (B2); and a beam guide jig 80 for selectively pressurizing a first cover P1 toward a housing P2, the beam guide jig 80 having a channel 81 formed oppositely along the circumference of a first welding edge R1 such that exits of the second fibers 61, 61' are arranged therein. Therefore, the second laser beam (B2) can be emitted simultaneously through the entire channel 81 to weld the first and second welding edges R1, R2 at once, thereby shortening the time required for welding and improving efficiency.

In addition, the temperature (output) of the second laser beam (B2) emitted to the channel 81 in the process of welding the temporary assembly P can be monitored in real time through the monitoring unit 70, so that the presence of welding defects can be checked in real time, which enables high-quality welding and easy maintenance.

## Claims

1. A laser scanning-type plastic welding device using a bundle fiber, which is for welding a first welding edge R1 of a cover P1 made of transparent plastic through which a laser beam is transmitted to a second welding edge R2 of a housing P2 made of opaque plastic with a three-dimensional shape by using a laser beam, the device comprising:
a scanner 10 comprising a laser oscillator, a light source, and multiple rotatable mirrors, thereby emitting a laser beam (B);
a beam box 20 installed at a lower side of the scanner 10 so as to form a space through which a laser beam (B) is emitted;
a first holding plate 30 supported on a lower end of the beam box 20 such that a laser beam (B) is emitted thereto;
a first bundle fiber 40 supported on the first holding plate 30 and made of multiple first fibers 41, 41' such that a laser beam (B) emitted thereto branches off into multiple first laser beams B1;
a second holding plate 50 supported on a pair of bridges 51 extending from the beam box 20;
a second bundle fiber 60 supported on the second holding plate 50 and made of multiple second fibers 61, 61' connected to the multiple first fibers 41, 41', respectively, such that a first laser beam (B2) emitted thereto branches off into multiple second laser beams (B2); and
a beam guide jig 80 for selectively pressurizing a first cover P1 toward a housing P2, the beam guide jig 80 having a channel 81 formed oppositely along the circumference of a first welding edge R1 such that exits of the second fibers 61, 61' are arranged therein.

2. The laser scanning-type plastic welding device using a bundle fiber according to claim 1,
further comprising a monitoring unit 70 for monitoring the operation status using a detecting fiber 62 branched off from the second bundle fiber 60.

3. The laser scanning-type plastic welding device using a bundle fiber according to claim 2, wherein the monitoring unit 70 comprises:
a power detector 71 that detects the output of the second laser beam (B2) emitted from a first detecting fiber 62a among the detecting fibers and checks in real time whether the second laser beam (B2) is currently being emitted;
a heat detector 72 that detects the second laser beam (B2) emitted from a second detecting fiber 62b among the detecting fibers and generates a signal for inspecting the temperature of the product welding part to which the output of the emitted second laser beam (B2) is applied; and
a beam profiler 73 that detects the second laser beam (B2) irradiated from the second detecting fiber 62c among the detecting fibers and checks the characteristics of the emitted second laser beam (B2).

4. The laser scanning-type plastic welding device using a bundle fiber according to claim 1,
further comprising a contamination source inflow prevention unit 90 for preventing external contamination sources from flowing into the inside of the beam box 20,
wherein the contamination source inflow prevention unit 90 includes an air entrance 91 formed on the upper side of the beam box 20 to supply air in which foreign substances are filtered and removed, and a plurality of air exhaust holes 92 formed on the lower side of the beam box 20 to exhaust air that has flowed into the air entrance 91.

5. The laser scanning-type plastic welding device using a bundle fiber according to claim 1,
further comprising a first cooling part 100 for cooling the first holding plate 30 while the scanner 10 is in operation.

6. The laser scanning-type plastic welding device using a bundle fiber according to claim 1,
further comprising a fiber temperature sensor unit 110 installed on the first holding plate 30 and comprising a plurality of temperature sensors 111, 111', each of which is independently connected to the first fibers 41, 41' constituting the first bundle fiber 40, and which measures the temperature of each of the first fibers 41, 41' and generate a corresponding signal.

7. The laser scanning-type plastic welding device using a bundle fiber according to claim 1,
further comprising a second cooling part 120 for cooling the second holding plate 50 while the scanner 10 is in operation.
